(19)

Europäisches
Patentamt
European
Patent Office
Office européen
des brevets

(11)  **EP 4 528 671 A1**

(12)  **EUROPEAN PATENT APPLICATION**
published in accordance with Art. 153(4) EPC

(43) Date of publication:
**26.03.2025  Bulletin 2025/13**

(21) Application number: **23822954.6**

(22) Date of filing: **02.06.2023**

(51) International Patent Classification (IPC):
***G06V 10/776*** *(2022.01)*

(86) International application number:
**PCT/CN2023/098117**

(87) International publication number:
**WO 2023/241385 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **14.06.2022  CN 202210665169**

(71) Applicant: **Huawei Technologies Co., Ltd.
Shenzhen, Guangdong 518129 (CN)**

(72) Inventors:
 • **ZHOU, Fengwei
   Shenzhen, Guangdong 518129 (CN)**
 • **XIE, Chuanlong
   Shenzhen, Guangdong 518129 (CN)**
 • **DONG, Qishi
   Shenzhen, Guangdong 518129 (CN)**
 • **HU, Tianyang
   Shenzhen, Guangdong 518129 (CN)**
 • **YANG, Yongxin
   Shenzhen, Guangdong 518129 (CN)**
 • **LI, Zhenguo
   Shenzhen, Guangdong 518129 (CN)**

(74) Representative: **Gill Jennings & Every LLP
The Broadgate Tower
20 Primrose Street
London EC2A 2ES (GB)**

(54)  **MODEL TRANSFERRING METHOD AND APPARATUS, AND ELECTRONIC DEVICE**

(57)  This application relates to a model migration method in the field of artificial intelligence, including: obtaining sample data of a target task, where the sample data includes a plurality of image samples; separately evaluating N pre-trained models based on the sample data, to obtain N evaluation values, where the evaluation value represents adaptation between the pre-trained model and the target task, and N≥2; determining K pre-trained models from the N pre-trained models based on the N evaluation values, where the K pre-trained models are models corresponding to first K evaluation values obtained by sorting the N evaluation values in descending order, and 1≤K≤N; and processing the sample data based on the K pre-trained models to obtain a target model used to process the target task, where the target model includes the K pre-trained models. **In** this way, a pre-trained model applicable to a current task can be quickly found in a model library formed by a large quantity of pre-trained models, and capabilities of a plurality of optimal pre-trained models can be ensembled to jointly resolve the current task. This effectively improves an out-of-distribution generalization capability of the pre-trained model.

FIG. 6

EP 4 528 671 A1

**Description**

This application claims priority to Chinese Patent Application No. 202210665169.3, filed with the China National Intellectual Property Administration on June 14, 2022 and entitled "MODEL MIGRATION METHOD AND APPARATUS, AND ELECTRONIC DEVICE", which is incorporated herein by reference in its entirety.

**TECHNICAL FIELD**

This application relates to the field of artificial intelligence technologies, and in particular, to a model migration method and apparatus, and an electronic device.

**BACKGROUND**

With rapid development of deep learning, a large quantity of deep learning models are trained for various tasks in the industry and academia. In this case, a user can easily obtain various pre-trained models (namely, pre-trained network models), for example, a target detection model and an animal recognition model. Training each pre-trained model needs a large amount of data and strong computing power. The pre-trained model has various powerful functions. However, because a target task is usually unknown, no information about the target task can be obtained in a training process of the pre-trained model. Therefore, it is difficult for the pre-trained model to achieve good performance in the target task. In this case, it is difficult to migrate the pre-trained model to a downstream task. In other words, it is difficult to directly process the downstream task by using the pre-trained model.

In addition, in deep learning, it is usually assumed that a training sample and a test sample are from a same probability distribution. Then, a corresponding model is designed, and the corresponding model is processed by using the training sample, to obtain a required network model. The network model is expected to perform well on the test sample. However, in many actual problem scenarios, a probability distribution of a training sample and a probability distribution of a test sample are different. As a result, it is difficult for a network model obtained through training to adapt to the test sample. For example, in an image processing scenario, original pictures collected by electronic devices (for example, mobile phones) of different models are different due to different components, and therefore, it is difficult to migrate a network model trained based on data of an electronic device of one model to another electronic device.

Therefore, currently, how to migrate the pre-trained model to the downstream task to improve an out-of-distribution generalization capability of the pre-trained model is a technical problem that urgently needs to be resolved.

**SUMMARY**

This application provides a model migration method and apparatus, an electronic device, a computer storage medium, and a computer program product, so that a model adapted to a target task can be selected through screening from a large quantity of pre-trained models. Models selected through screening can be combined into a model used to process the target task. Further, the target task may be processed by using the model. This effectively improves an out-of-distribution generalization capability of the pre-trained model.

According to a first aspect, this application provides a model migration method, including: obtaining sample data of a target task, where the sample data includes a plurality of image samples; separately evaluating N pre-trained models based on the sample data, to obtain N evaluation values, where the evaluation value represents adaptation between the pre-trained model and the target task, one pre-trained model corresponds to one evaluation value, and N≥2; determining K pre-trained models from the N pre-trained models based on the N evaluation values, where the K pre-trained models are models corresponding to first K evaluation values obtained by sorting the N evaluation values in descending order, and 1≤K≤N; and processing the sample data based on the K pre-trained models to obtain a target model, where the target model includes the K pre-trained models, and the target model is used to process the target task.

In this way, after the target task is determined, the pre-trained model applicable to the target task can be quickly selected through screening from a model library formed by a large quantity of pre-trained models. The target model that is applied to process the target task and includes the pre-trained model selected through screening is obtained based on the pre-trained model selected through screening, so that the target task can be processed by using the target model. This effectively improves an out-of-distribution generalization capability of the pre-trained model.

In a possible implementation, the separately evaluating N pre-trained models based on the sample data of the target task, to obtain N evaluation values specifically includes: dividing the sample data into M pieces of data, where M≥2; selecting one piece of data from the M pieces of data as verification data, and using remaining data in the M pieces of data as training data; determining a first validity value of each pre-trained model and a first stability value of each pre-trained model based on the training data and the verification data, where the first validity value represents accuracy of predicting a label of the verification data based on a feature extracted from the training data by using the pre-trained model, and the first stability value represents similarity between a feature of the training data and a feature of the verification data that are extracted by using the pre-trained model; and determining the N evaluation values based on the first validity value and the first stability value of each pre-trained model.

In a possible implementation, the determining a first validity value of each pre-trained model based on the training data and the verification data specifically includes: for any first pre-trained model in the N pre-trained models, performing feature extraction on the training data by using the first pre-trained model, to obtain a first feature set, where the first feature set includes a feature corresponding to each sample in the training data; and determining a first validity value of the first pre-trained model based on the first feature set, a first label set associated with the first feature set, a second feature set, and a second label set associated with the second feature set, where the first label set includes a label corresponding to each sample in the training data, the second feature set includes a feature that corresponds to each sample in the verification data and that is extracted by using the first pre-trained model, and the second label set includes a label corresponding to each sample in the verification data.

In a possible implementation, the determining a first validity value of the first pre-trained model based on the first feature set, a first label set associated with the first feature set, a second feature set, and a second label set associated with the second feature set specifically includes: constructing a first prediction model based on the first feature set, the first label set, and a preset classifier; and processing, based on the first prediction model, at least the second feature set and the second label set to obtain the first validity value of the first pre-trained model. For example, the preset classifier may be but is not limited to a linear classifier.

In a possible implementation, the determining a first stability value of each pre-trained model based on the training data and the verification data specifically includes: for any first pre-trained model in the N pre-trained models, performing feature extraction on the training data by using the first pre-trained model, to obtain a first feature set, where the first feature set includes a feature corresponding to each sample in the training data; and determining a first stability value of the first pre-trained model based on the first feature set and a second feature set, where the second feature set includes a feature that corresponds to each sample in the verification data and that is extracted by using the first pre-trained model.

In a possible implementation, the determining a first stability value of the first pre-trained model based on the first feature set and a second feature set specifically includes: constructing a target distribution based on the first feature set, where the target distribution includes one or more of a Gaussian distribution, a Bernoulli distribution, a Poisson distribution, a geometric distribution, or a beta distribution; determining, based on the target distribution, a likelihood function value corresponding to the second feature set; and using the likelihood function value corresponding to the second feature set as the first stability value of the first pre-trained model.

In a possible implementation, the method further includes: using each of the M pieces of data as verification data once, and determining a first validity value of each pre-trained model once and a first stability value of each pre-trained model once based on verification data selected each time, where each pre-trained model corresponds to M first validity values and M first stability values.

The determining the N evaluation values based on the first validity value and the first stability value of each pre-trained model further includes: determining a second validity value of each pre-trained model and a second stability value of each pre-trained model based on the M first validity values and the M first stability values that correspond to each pre-trained model; and determining the N evaluation values based on the second validity value and the second stability value of each pre-trained model.

In this way, the verification data and the training data are rotated, so that a required final validity value can be determined based on a plurality of validity values, and a required final stability value can be determined based on a plurality of stability values. This improves accuracy of the validity value and the stability value, to further improve accuracy of a subsequent evaluation value.

In a possible implementation, a target validity value is the first validity value, and a target stability value is the first stability value; or a target validity value is the second validity value, and a target stability value is the second stability value.

The determining the N evaluation values based on the target validity value and the target stability value of each pre-trained model specifically includes: determining a weight value of a target value based on N target validity values and N target stability values, where the target value is the target validity value or the target stability value; and separately processing, based on the weight value of the target value, the target validity value and the target stability value that correspond to each pre-trained model, to obtain an evaluation value of each pre-trained model.

In a possible implementation, the processing the sample data based on the K pre-trained models to obtain a target model specifically includes: separately performing feature extraction on the sample data by using the K pre-trained models, to obtain K third feature sets, where one third feature set is a set of features extracted by using one of the K pre-trained models; training a to-be-trained network model by using the K third feature sets, to obtain a first network model; and obtaining the target model based on the K pre-trained models and the first network model.

In a possible implementation, the training a to-be-trained network model by using the K third feature sets specifically includes: performing feature screening on each of the K third feature sets, to obtain K fourth feature sets, where each fourth feature set corresponds to one third feature set; and training the to-be-trained network model by using the K fourth feature sets. In this way, features in each third feature set may be screened, to retain a necessary feature and discard some unnecessary features, so as to improve precision of subsequent model training and further improve prediction accuracy of a finally obtained model.

In a possible implementation, the performing feature screening on each of the K third feature sets specifically includes: constructing, for any feature set in the K third feature sets, a probability model of the any feature set based on a spike-and-slab prior; determining, based on the probability model and according to a Bayesian hierarchical modeling method, a marginal probability value of a target label set corresponding to the any feature set; determining a second marginal likelihood function value of the target label set based on the marginal probability value of the target label set; determining, by using a variational inference-based expectation-maximization algorithm to maximize the second marginal likelihood function value, a probability that an indication variable corresponding to each feature in the any feature set is equal to 1; and when a probability that an indication variable corresponding to a target feature in the any feature set is equal to 1 is greater than or equal to a preset probability value, retaining the target feature; or when a probability that an indication variable corresponding to a target feature is equal to 1 is less than a preset probability value, removing the target feature.

According to a second aspect, this application provides a model migration apparatus, including a communication module and a processing module. The communication module is configured to obtain sample data of a target task, where the sample data includes a plurality of image samples. The processing module is configured to separately evaluate N pre-trained models based on the sample data, to obtain N evaluation values, where the evaluation value represents adaptation between the pre-trained model and the target task, one pre-trained model corresponds to one evaluation value, and $N \geq 2$. The processing module is further configured to determine K pre-trained models from the N pre-trained models based on the N evaluation values, where the K pre-trained models are models corresponding to first K evaluation values obtained by sorting the N evaluation values in descending order, and $1 \leq K \leq N$. The processing module is further configured to process the sample data based on the K pre-trained models to obtain a target model, where the target model includes the K pre-trained models, and the target model is used to process the target task.

In a possible implementation, when separately evaluating the N pre-trained models based on the sample data of the target task, to obtain the N evaluation values, the processing module is specifically configured to: divide the sample data into M pieces of data, where $M \geq 2$; select one piece of data from the M pieces of data as verification data, and use remaining data in the M pieces of data as training data; determine a first validity value of each pre-trained model and a first stability value of each pre-trained model based on the training data and the verification data, where the first validity value represents accuracy of predicting a label of the verification data based on a feature extracted from the training data by using the pre-trained model, and the first stability value represents similarity between a feature of the training data and a feature of the verification data that are extracted by using the pre-trained model; and determine the N evaluation values based on the first validity value and the first stability value of each pre-trained model.

In a possible implementation, when determining the first validity value of each pre-trained model based on the training data and the verification data, the processing module is specifically configured to: for any first pre-trained model in the N pre-trained models, perform feature extraction on the training data by using the first pre-trained model, to obtain a first feature set, where the first feature set includes a feature corresponding to each sample in the training data; and determine a first validity value of the first pre-trained model based on the first feature set, a first label set associated with the first feature set, a second feature set, and a second label set associated with the second feature set, where the first label set includes a label corresponding to each sample in the training data, the second feature set includes a feature that corresponds to each sample in the verification data and that is extracted by using the first pre-trained model, and the second label set includes a label corresponding to each sample in the verification data.

In a possible implementation, when determining the first validity value of the first pre-trained model based on the first feature set, the first label set associated with the first feature set, the second feature set, and the second label set associated with the second feature set, the processing module is specifically configured to: construct a first prediction model based on the first feature set, the first label set, and a preset classifier; and process, based on the first prediction model, at least the second feature set and the second label set to obtain the first validity value of the first pre-trained model.

In a possible implementation, when determining the first stability value of each pre-trained model based on the training data and the verification data, the processing module is specifically configured to: for any first pre-trained model in the N pre-trained models, perform feature extraction on the training data by using the first pre-trained model, to obtain a first feature set, where the first feature set includes a feature corresponding to each sample in the training data; and determine a first stability value of the first pre-trained model based on the first feature set and a second feature set, where the second feature set includes a feature that corresponds to each sample in the verification data and that is extracted by using the first pre-trained model.

In a possible implementation, when determining the first stability value of the first pre-trained model based on the first feature set and the second feature set, the processing module is specifically configured to: construct a target distribution based on the first feature set, where the target distribution includes one or more of a Gaussian distribution, a Bernoulli distribution, a Poisson distribution, a geometric distribution, or a beta distribution; determine, based on the target distribution, a likelihood function value corresponding to the second feature set; and use the likelihood function value corresponding to the second feature set as the first stability value of the first pre-trained model.

**In** a possible implementation, the processing module is further configured to: use each of the M pieces of data as verification data once, and determine a first validity value of each pre-trained model once and a first stability value of each pre-trained model once based on verification data selected each time, where each pre-trained model corresponds to M first validity values and M first stability values.

When determining the N evaluation values based on the first validity value and the first stability value of each pre-trained model, the processing module is further configured to: determine a second validity value of each pre-trained model and a second stability value of each pre-trained model based on the M first validity values and the M first stability values that correspond to each pre-trained model; and determine the N evaluation values based on the second validity value and the second stability value of each pre-trained model.

In a possible implementation, a target validity value is the first validity value, and a target stability value is the first stability value; or a target validity value is the second validity value, and a target stability value is the second stability value.

When determining the N evaluation values based on the target validity value and the target stability value of each pre-trained model, the processing module is specifically configured to: determine a weight value of a target value based on N target validity values and N target stability values, where the target value is the target validity value or the target stability value; and separately process, based on the weight value of the target value, the target validity value and the target stability value that correspond to each pre-trained model, to obtain an evaluation value of each pre-trained model.

In a possible implementation, when processing the sample data based on the K pre-trained models to obtain the target model, the processing module is specifically configured to: separately perform feature extraction on the sample data by using the K pre-trained models, to obtain K third feature sets, where one third feature set is a set of features extracted by using one of the K pre-trained models; train a to-be-trained network model by using the K third feature sets, to obtain a first network model; and obtain the target model based on the K pre-trained models and the first network model.

In a possible implementation, when training the to-be-trained network model by using the K third feature sets, the processing module is specifically configured to: perform feature screening on each of the K third feature sets, to obtain K fourth feature sets, where each fourth feature set corresponds to one third feature set; and train the to-be-trained network model by using the K fourth feature sets.

In a possible implementation, when performing feature screening on each of the K third feature sets, the processing module is specifically configured to: construct, for any feature set in the K third feature sets, a probability model of the any feature set based on a spike-and-slab prior; determine, based on the probability model and according to a Bayesian hierarchical modeling method, a marginal probability value of a target label set corresponding to the any feature set; determine a second marginal likelihood function value of the target label set based on the marginal probability value of the target label set; determine, by using a variational inference-based expectation-maximization algorithm to maximize the second marginal likelihood function value, a probability that an indication variable corresponding to each feature in the any feature set is equal to 1; and when a probability that an indication variable corresponding to a target feature in the any feature set is equal to 1 is greater than or equal to a preset probability value, retain the target feature; or when a probability that an indication variable corresponding to a target feature is equal to 1 is less than a preset probability value, remove the target feature.

According to a third aspect, this application provides a model migration apparatus, including at least one processor and an interface. The at least one processor obtains program instructions or data through the interface. The at least one processor is configured to execute the program instructions, to implement the method described in any one of the first aspect or the possible implementations of the first aspect.

According to a fourth aspect, this application provides an electronic device, including: at least one memory, configured to store a program; and at least one processor, configured to execute the program stored in the memory. When the program stored in the memory is executed, the processor is configured to perform the method described in any one of the first aspect or the possible implementations of the first aspect.

According to a fifth aspect, this application provides a computer-readable storage medium, where the computer-readable storage medium stores a computer program. When the computer program is run on a processor, the processor is enabled to perform the method described in any one of the first aspect or the possible implementations of the first aspect.

According to a sixth aspect, this application provides a computer program product. When the computer program product runs on a processor, the processor is enabled to perform the method described in any one of the first aspect or the possible implementations of the first aspect.

It may be understood that, for beneficial effects of the second aspect to the sixth aspect, refer to related descriptions in the first aspect. Details are not described herein again.

BRIEF DESCRIPTION OF DRAWINGS

The following briefly describes accompanying drawings that need to be used in descriptions of embodiments or the conventional technology.

FIG. 1 is a diagram of an application scenario according to an embodiment of this application;

FIG. 2 is a diagram of a hardware structure of an electronic device according to an embodiment of this application;

FIG. 3 is a diagram of a hardware structure of a server according to an embodiment of this application;

FIG. 4 is a schematic flowchart of a model migration method according to an embodiment of this application;

FIG. 5 is a diagram of steps of determining a validity value of a pre-trained model according to an embodiment of this application;

FIG. 6 is a diagram of a process of a model migration method according to an embodiment of this application;

FIG. 7 is a diagram of comparison of results obtained by processing data by using ZooD and another evaluation method according to an embodiment of this application;

FIG. 8 is a diagram of comparison between times for evaluating 35 models by using ZooD and times for evaluating the 35 models in a fine-tuning manner according to an embodiment of this application;

FIG. 9 is a diagram of comparison between classification accuracy of a model obtained by performing feature screening by using different quantities of pre-trained models and classification accuracy of a model obtained by performing no feature screening according to an embodiment of this application;

FIG. 10 is a diagram of comparison between a classification effect achieved by performing model selection, feature screening, and ensembling and a classification effect achieved by using another method of improving a model generalization effect according to an embodiment of this application;

FIG. 11 is a diagram of a structure of a model migration apparatus according to an embodiment of this application; and

FIG. 12 is a diagram of a structure of another model migration apparatus according to an embodiment of this application.

## DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word "example", "for example", or the like is used to give an example, an illustration, or a description. Any embodiment or design scheme described as an "example" or "for example" in embodiments of this application should not be explained as being more preferred or having more advantages than another embodiment or design scheme. Specifically, use of "example" or "for example" is intended to present a related concept in a specific manner.

In the descriptions of embodiments of this application, unless otherwise specified, "a plurality of" means two or more. For example, a plurality of processing units are two or more processing units, and a plurality of elements are two or more elements.

Usually, in many actual problem scenarios, a probability distribution of a training sample and a probability distribution of a test sample are different. One way to improve an out-of-distribution generalization capability (namely, a generalization capability of a model for a task in a distribution change scenario) of a deep learning model is to collect labeling data as much as possible. However, collecting a large amount of labeling data is time-consuming and labor-intensive, and in many cases, a large amount of training data cannot be collected. In addition, a variety of pre-trained models can now be easily obtained, and these models have a strong out-of-distribution generalization capability when being migrated to a downstream task. For a downstream target task, if a model most suitable for the current task can be quickly selected from a large quantity of pre-trained models, and capabilities of a plurality of models can be ensembled, a generalization capability for the target task can be further improved.

To resolve these problems, this application proposes a model migration method. In the method, a pre-trained model applicable to a current task can be quickly found in a model library formed by a large quantity of pre-trained models, and capabilities of a plurality of optimal pre-trained models can be ensembled to jointly resolve the current task. This effectively improves an out-of-distribution generalization capability of the pre-trained model.

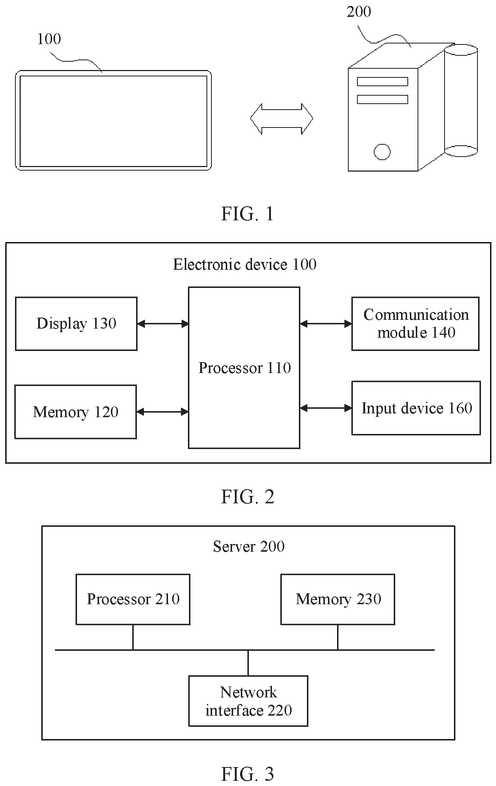

For example, FIG. 1 shows an application scenario. As shown in FIG. 1, an electronic device 100 and a server 200 may be included in this scenario. The user may access, by using the electronic device 100, data provided by the server 200. For example, the user may browse, on the electronic device 100, all pre-trained models provided by the server 200. In addition, the user may upload sample data of a target task to the server 200 by using the electronic device 100, so that the server 200 determines a network model applicable to the target task.

In some embodiments, the electronic device 100 and the server 200 may be connected via a network like a wired network (wired network) or a wireless network (wireless network). For example, the network may be a local area network (local area network, LAN), or may be a wide area network (wide area network, WAN) (for example, the Internet). The network between the electronic device 100 and the server 200 may be implemented by using any known network communication protocol. The network communication protocol may be various wired or wireless communication protocols, such as Ethernet, a universal serial bus (universal serial bus, USB), a firewire (firewire), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio (new radio, NR), Bluetooth (Bluetooth), and wireless fidelity (wireless fidelity, Wi-Fi).

For example, FIG. 2 shows a hardware structure of the electronic device 100. The electronic device 100 may be, but is not limited to, an electronic device like a mobile phone, a tablet computer, a notebook computer, a wearable device, and a smart television. An example embodiment of the electronic device includes but is not limited to an electronic device carrying an iOS, Android, Windows, HarmonyOS (Harmony OS), or another operating system. A type of the electronic device is not specifically limited in embodiments of this application.

As shown in FIG. 2, the electronic device 100 may include a processor 110, a memory 120, a display 130, a communication module 140, and an input device 150. The processor 110, the memory 120, the display 130, the communication module 140, and the input device 150 may be connected by using a bus or in another manner.

The processor 110 is a computing core and a control core of the electronic device 100. The processor 110 may include one or more processing units. For example, the processor 110 may include one or more of an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The memory 120 may store a program, and the program may be run by the processor 110, so that the processor 110 performs some or all methods that need to be performed by the electronic device 100 provided in this embodiment of this application. The memory 120 may further store data. The processor 110 may read the data stored in the memory 120. The memory 120 and the processor 110 may be separately disposed. Optionally, the memory 120 may alternatively be integrated into the processor 110.

The display 130 is configured to display an image, a video, and the like. The display 130 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The communication module 140 may include at least one of a mobile communication module and a wireless communication module. When the communication module 140 includes the mobile communication module, the communication module 140 may provide a solution applied to the electronic device 100 for wireless communication such as 2G/3G/4G/5G, for example, global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), and new radio (new radio, NR). When the communication module 140 includes a wireless communication module, the communication module 140 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. For example, the electronic device 100 may use the communication module 140 to communicate with the server 200, so as to complete data exchange.

In some embodiments, the electronic device 100 may further include an input device 150. The input device 150 may input information and/or deliver a control instruction to the electronic device 100, and the like. For example, the input device 150 may be, but is not limited to, a mouse, a keyboard, or the like.

It may be understood that the structure shown in FIG. 2 in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

For example, FIG. 3 shows a hardware structure of the server 200. The server 200 may be configured to provide a cloud service, but the server 200 is not limited to providing the cloud service. The server 200 may be a server or a super electronic device that can establish a communication connection with the electronic device 100 and can provide a data processing function, an operation function, and/or a storage function for the electronic device 100. The server 200 may be a hardware server, or may be implanted in a virtualized environment. For example, the server 200 may be a virtual machine executed on a hardware server that may include one or more other virtual machines.

As shown in FIG. 3, the server 200 may include: a processor 210, a network interface 220, and a memory 230. The processor 210, the network interface 220, and the memory 230 may be connected through a bus or in another manner.

In this embodiment of this application, the processor 210 (or referred to as a central processing unit (central processing unit, CPU)) is a computing core and a control core of the server 200. In some embodiments, the processor 210 may determine a network model applicable to the target task based on sample data that is of the target task and that is provided by the electronic device 100.

The network interface 220 may include a standard wired interface and a wireless interface (for example, Wi-Fi and a mobile communication interface), and is controlled by the processor 210 for data receiving and sending, for example, receiving, via a network, the sample data that is of the target task and that is sent by the electronic device 100.

The memory (memory) 230 is a memory device of the server 200, and is configured to store a program and data, for example, store a pre-trained model. It may be understood that the memory 230 may be a high-speed RAM memory, or may be a non-volatile memory (non-volatile memory), for example, at least one magnetic disk memory. Optionally, the memory 230 may further be at least one storage apparatus that is away from the foregoing processor 210. The memory 230 provides storage space. The storage space stores an operating system and executable program code of the server, and may include but is not limited to: a Windows system (an operating system), a Linux system (an operating system), a HarmonyOS (an operating system), and the like. This is not limited herein.

It may be understood that the structure shown in FIG. 3 in this embodiment of this application does not constitute a specific limitation on the server 200. In some other embodiments of this application, the server 200 may include more or fewer components than those shown in the figure, or some components are combined, or some components are split, or a different component arrangement may be used. The components shown in the figure may be implemented through hardware, software, or a combination of software and hardware.

The foregoing is related descriptions of the application scenario, the hardware structure of the electronic device 100, and the hardware structure of the server 200 in embodiments of this application. The following describes, based on the foregoing descriptions, a model migration method provided in embodiments of this application.

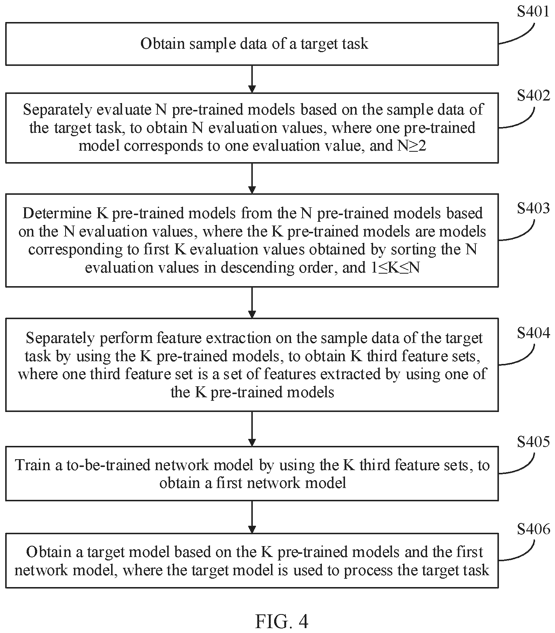

For example, FIG. 4 shows a model migration method. It may be understood that the method may be performed by any apparatus, device, platform, or device cluster that has a computing and processing capability, for example, the foregoing server 200. For ease of description, the following uses the server 200 as an example for description. As shown in FIG. 4, the model migration method may include the following steps.

S401: Obtain sample data of a target task.

In this embodiment, a user may upload the sample data of the target task to the server 200 by using an electronic device 100. In this way, the server 200 obtains the sample data of the target task. The target task is a downstream task specified by the user, for example, an image recognition task. In some embodiments, the sample data may include a plurality of samples, and each sample may correspond to one label. For example, a sample in the sample data may be, but is not limited to, an image.

S402: Separately evaluate N pre-trained models based on the sample data of the target task, to obtain N evaluation values, where one pre-trained model corresponds to one evaluation value, and N≥2.

In this embodiment, the N pre-trained models may be separately evaluated based on the sample data of the target task, to obtain the N evaluation values. Each pre-trained model may correspond to one evaluation value. The evaluation value may represent adaptation between the pre-trained model and the target task.

In some embodiments, a validity value and a stability value of each pre-trained model may be evaluated, and an evaluation value corresponding to each pre-trained model is determined based on the validity value and the stability value that correspond to each pre-trained model. The validity value may represent accuracy of predicting a label of verification data based on a feature extracted from training data by using the pre-trained model. The stability value may represent similarity between a feature corresponding to the training data and a feature corresponding to the verification data in the sample data. In some other embodiments, the validity value may be used as the evaluation value, or the stability value may be used as the evaluation value. This is not limited herein.

The following separately describes processes of obtaining the validity value, the stability value, and the evaluation value of each pre-trained model.

(a) Determining the validity value of the pre-trained model.

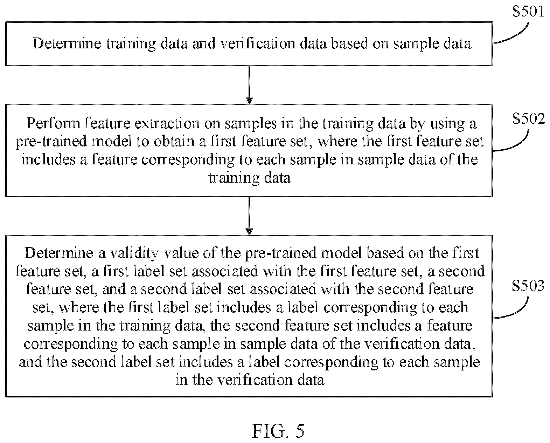

In this embodiment, for any pre-trained model, as shown in FIG. 5, determining a validity value of the pre-trained model may include the following steps.

S501: Determine training data and verification data based on sample data.

In this embodiment, samples in the sample data may be divided into a plurality of pieces, one piece of the samples is selected as the verification data, and remaining samples are used as the training data.

In a possible implementation of dividing the sample data, when the sample data has a distribution label used to identify a distribution status of data, the sample data is divided based on the distribution label. For example, when the sample data is image data, if the distribution label includes: day and sunny, day and rainy, night and sunny, and night and rainy, day-and-sunny image data may be divided into one piece of data, day-and-rainy image data may be divided into one piece of data, night-and-sunny image data may be divided into one piece of data, and night-and-rainy image data may be divided into one piece of data. For example, the distribution label may represent a probability distribution of samples.

In another possible implementation, when the sample data does not have a distribution label, the sample data may be divided according to a preset division rule. In some embodiments, the division rule may be dividing the sample data based on a preset quantity of pieces of divided data. For example, if the preset quantity of pieces of divided data is 5, the sample data may be divided into five pieces of data. In some other embodiments, the division rule may alternatively be determining a quantity of pieces of divided data based on a type of the target task, and then dividing the sample data based on the quantity of pieces of divided data. For example, a preset table of a mapping relationship between a type and a quantity of pieces of divided data may be queried based on the type of the target task, to determine the required quantity of pieces of divided data.

S502: Perform feature extraction on the samples in the training data by using the pre-trained model to obtain a first feature set, where the first feature set includes a feature corresponding to each sample in the training data.

In this embodiment, each sample in the training data may be input into the pre-trained model, to perform feature extraction on each sample in the training data by using the pre-trained model, so as to obtain the first feature set. For example, the first feature set includes the feature corresponding to each sample in the training data.

S503: Determine a validity value of the pre-trained model based on the first feature set, a first label set associated with the first feature set, a second feature set, and a second label set associated with the second feature set, where the first label set includes a label corresponding to each sample in the training data, the second feature set includes a feature corresponding to each sample in the verification data, and the second label set includes a label corresponding to each sample in the verification data.

In this embodiment, a prediction model may be first obtained by maximizing a Bayesian model evidence based on the first feature set and the first label set. Then, the second feature set and the second label set are processed by using the prediction model, to obtain the validity value of the pre-trained model. The second feature set may be obtained by performing feature extraction on each sample in the verification data by using the to-be-evaluated pre-trained module (namely, the model in S502).

In a possible implementation, the first feature set may be represented by $\Phi = \{\varphi_i\}_{i=1}^{n}$, the first label set may be represented by $Y = \{y_i\}_{i=1}^{n}$, the second feature set may be represented by $\Phi' = \{\varphi'_i\}_{i=1}^{n'}$, and the second label set may be represented by $Y' = \{y'_i\}_{i=1}^{n'}$.

For the first feature set, a prediction model may be obtained by maximizing the Bayesian model evidence. To be specific, a linear classifier $y_i = w^T\varphi_i$ is considered. Herein, w satisfies a Gaussian distribution $N(0, \alpha^{-1})$, and when $w$ and $\varphi_i$ are given, $y_i$ satisfies a Gaussian distribution $N(w^T\varphi_i, \beta^{-1})$. When w is fixed, a conditional probability value

$$p(y_i|w, \varphi_i) = \frac{\sqrt{\beta}}{\sqrt{2\pi}}exp\left(-\frac{\beta(y_i - w^T\varphi_i)^2}{2}\right)$$

of each label in the first label set and conditional probability values

$$p(Y|w, \Phi) = \prod_{i=1}^{n} p(y_i|w, \varphi_i)$$

of all labels in the first label set may be obtained through calculation.

A marginal probability value corresponding to the first label set may be obtained through calculation based on each possible *w*. A marginal probability value $p(Y|\Phi; \alpha, \beta) = \int p(w|\alpha) p(Y|w, \Phi)dw$ of the first label set may be finally obtained based on the marginal probability value that is obtained based on each possible w. A marginal likelihood function value $log\, p(Y|\Phi; \alpha, \beta)$ corresponding to the first label set may be obtained by inputting features included in the first feature set and labels included in the first label set into the finally obtained marginal probability value $p(Y|\Phi; \alpha, \beta)$ of the first label set. $\alpha$ and $\beta$ in the marginal likelihood function value $log\, p(Y|\Phi; \alpha, \beta)$ are optimized, so that the marginal likelihood function value may be maximized, and corresponding $\hat{\alpha}$ and $\hat{\beta}$ are obtained, so as to obtain a required prediction model $p(Y|\Phi; \hat{\alpha}, \hat{\beta}) = \int p(w|\hat{\alpha}) p(Y|w, \Phi)dw$.

Then, the first feature set, the first label set, the second feature set, and the second label set may be processed by using the prediction model $p(Y|\Phi; \hat{\alpha}, \hat{\beta}) = \int p(w|\hat{\alpha}) p(Y|w, \Phi)dw$, to obtain marginal likelihood function values $log\, p(Y', Y|\Phi', \Phi; \hat{\alpha}, \hat{\beta})$ corresponding to all labels in the sample data.

Finally, a marginal likelihood function value corresponding to the second label set (namely, the labels in the verification data) may be obtained based on the marginal likelihood function values $log\, p(Y', Y|\Phi', \Phi; \hat{\alpha}, \hat{\beta})$ corresponding to all the labels in the sample data and the marginal likelihood function value $log\, p(Y|\Phi; \hat{\alpha}, \hat{\beta})$ corresponding to the first label set. The marginal likelihood function value of the second label set (namely, the labels in the verification data) is $log\,p(Y'|\Phi', Y,\Phi;\hat{\alpha},\hat{\beta}) = log\,p(Y',Y|\Phi',\Phi;\hat{\alpha},\hat{\beta}) - log\,p(Y|\Phi;\hat{\alpha},\hat{\beta})$. The marginal likelihood function value corresponding to the second label set is the validity value of the to-be-evaluated pre-trained module (namely, the model in S502).

In addition, to improve accuracy of the validity value, the verification data and the training data may be alternatively rotated in FIG. 5, to determine a plurality of validity values, and a final validity value is obtained based on the determined validity values. For example, a mean, a variance, or the like of the plurality of validity values may be used as the final validity value.

For example, it is assumed that the training data is divided into two pieces of data. For ease of description, one of the two pieces of data is referred to as first data, and the other is referred to as second data. In this case, the first piece of data may be used as the training data, the second piece of data may be used as the verification data, and when the method described in FIG. 5 is performed, a validity value a can be obtained. Then, the second piece of data may be used as the training data, the first piece of data may be used as the verification data, and when the method described in FIG. 5 is performed, a validity value b can be obtained. Finally, a final validity value c=(a+b)/2 may be obtained based on the validity values a and b.

For a manner of determining a validity value of another pre-trained model, refer to the foregoing descriptions. Details are not described herein again.

(b) Determining the stability value of the pre-trained model.

In this embodiment, for any pre-trained model, to determine a stability value of the pre-trained model, a distribution of features that are of training data and that are extracted by the pre-trained model may be estimated on the training data, and then the stability value of the pre-trained model is determined based on the distribution of the features corresponding to the training data.

In a possible implementation, the stability value of the pre-trained model may be determined by using a Gaussian distribution, a Bernoulli distribution, a Poisson distribution, a geometric distribution, a beta distribution, or the like. This is not limited herein.

The Gaussian distribution is used as an example. The first feature set may be represented by $\Phi = \{\varphi_i\}_{i=1}^{n}$. The first label set may be represented by $Y = \{y_i\}_{i=1}^{n}$. The second feature set may be represented by $\Phi' = \{\varphi'_i\}_{i=1}^{n'}$. The second label set may be represented by $Y' = \{y'_i\}_{i=1}^{n'}$. In this case, a mean $\mu$ of all features in the first feature set $\Phi = \{\varphi_i\}_{i=1}^{n}$ may be used as a mean of the Gaussian distribution, and a variance $\Sigma$ of all features $\Phi = \{\varphi_i\}_{i=1}^{n}$ in the first feature set may be used as a variance of the Gaussian distribution, to obtain a Gaussian distribution $N(\mu, \Sigma)$. Then, a likelihood function value

$$log\,p(\Phi'|\Phi) = log\,\frac{1}{\sqrt{(2\pi)^{n'}|\Sigma|}}\,exp\left(-\frac{(\Phi'-\mu)^T\Sigma^{-1}(\Phi'-\mu)}{2}\right)$$

corresponding to the second feature set $\Phi' = \{\varphi'_i\}_{i=1}^{n'}$ (namely, a feature set obtained by performing feature extraction on the samples in the verification data by using the pre-trained model) may be determined based on the Gaussian distribution. The likelihood function value corresponding to the second feature set $\Phi' = \{\varphi'_i\}_{i=1}^{n'}$ is the stability value of the to-be-evaluated pre-trained module (namely, the model in S502).

In addition, to improve accuracy of the stability value, the verification data and the training data may be alternatively rotated, to determine a plurality of stability values, and a final stability value is obtained based on the determined stability values. For example, a mean, a variance, and the like of the plurality of stability values may be used as the final stability value.

For example, it is assumed that the training data is divided into two pieces of data. For ease of description, one of the two pieces of data is referred to as first data, and the other is referred to as second data. In this case, the first piece of data may be used as the training data, the second piece of data may be used as the verification data, and a stability value d can be obtained. Then, the second piece of data may be used as the training data, the first piece of data may be used as the verification data, and a stability value e can be obtained. Finally, a final stability value f=(d+e)/2 may be obtained based on the stability values d and e.

For a manner of determining a stability value of another pre-trained model, refer to the foregoing descriptions. Details are not described herein again.

(c) Determining the evaluation value of the pre-trained model.

In this embodiment, after the validity value and the evaluation value of each pre-trained model are determined, the evaluation value of each pre-trained model may be determined based on the determined validity values and evaluation values.

In a possible manner, for any pre-trained model, calculation (for example, summation) may be performed on a validity value and an evaluation value that correspond to the pre-trained model based on a preset weight value, and an obtained result is used as the evaluation value of the pre-trained model.

In another possible implementation, weights of the validity value and the stability value of each pre-trained model may be first determined based on the validity value and the evaluation value. Then, calculation is performed on the validity value and the stability value that correspond to each pre-trained model based on the determined weights, and an obtained result is used as the evaluation value of the corresponding pre-trained model. In some embodiments, a standard deviation of all the validity values and a standard deviation of all the stability values may be calculated, and then a ratio of the standard deviation of the validity values to the standard deviation of the stability values is used as a weight value of the stability value. A weight value of the validity value may be (1-the weight value of the stability value), or may be another fixed value. This is not limited herein. After the weight of the validity value and the weight of the stability value are determined, when an evaluation value of any pre-trained model is determined, weighted sum may be performed on a validity value and a stability value that correspond to the pre-trained model, and an obtained result is used as the evaluation value of the pre-trained model. For example, if the weight of the stability value determined based on validity values and stability values of all the pre-trained models is $\gamma$, for any pre-trained model, if a validity value of the pre-trained model is $log\ \hat{p}(Y'|\Phi',Y,\Phi)$ and a stability value of the pre-trained model is $log\ \hat{p}(\Phi'|\Phi)$, an evaluation value of the pre-trained model may be $log\ \hat{p}(Y'|\Phi',Y,\Phi) - \gamma\ log\ \hat{p}(\Phi'|\Phi)$.

After the evaluation value of each pre-trained model is obtained, S403 may be performed.

S403: Determine K pre-trained models from the N pre-trained models based on the N evaluation values, where the K pre-trained models are models corresponding to first K evaluation values obtained by sorting the N evaluation values in descending order, and $1 \le K \le N$.

In this embodiment, the K pre-trained models may be determined from the N pre-trained models based on the N evaluation values. In some embodiments, the N evaluation values may be sorted in descending order, first K evaluation values are selected based on a sorting result, and pre-trained models corresponding to the K evaluation values are used as the K pre-trained models determined from the N pre-trained models. Certainly, when the N evaluation values are sorted in ascending order, last K evaluation values may be selected based on a sorting result, and pre-trained models corresponding to the K evaluation values are used as the K pre-trained models determined from the N pre-trained models. An evaluation value corresponding to each of the K pre-trained models is greater than an evaluation value corresponding to a remaining model in the N pre-trained models.

S404: Separately perform feature extraction on the sample data of the target task by using the K pre-trained models, to obtain K third feature sets, where one third feature set is a set of features extracted by using one of the K pre-trained models.

In this embodiment, after the K pre-trained models are determined, feature extraction may be separately performed on the sample data of the target task by using the K pre-trained models, to obtain the K third feature sets. One third feature set is a set of features obtained by performing feature extraction on the sample data by using one of the K pre-trained models. For example, when K=2, two third feature sets may be obtained. One third feature set is a set of features obtained by performing feature extraction on a sample data set of the target task by using one of the pre-trained models, and the other third feature set is a set of features obtained by performing feature extraction on the sample data set of the target task by using another pre-trained model.

S405: Train a to-be-trained network model by using the K third feature sets, to obtain a first network model.

In this embodiment, after the K third feature sets are obtained, the to-be-trained network model may be trained by using the K third feature sets, to obtain the first network model. For example, the to-be-trained network model may be but is not limited to a classifier. In some embodiments, features in the K feature sets may be first concatenated into one feature, and then the to-be-trained network model is trained by using the feature obtained through concatenation.

In some embodiments, after one third feature set is extracted by using one pre-trained model, features in the third feature set may be screened, to keep a necessary feature and discard some unnecessary features, so as to improve precision of subsequent model training and further improve prediction accuracy of a finally obtained model.

In a possible implementation, an example in which a third feature set extracted from a pre-trained model is screened is used. The third feature set may be represented by $\Phi = \{\varphi_i\}_{i=1}^n$, and a third label set may be represented by $Y = \{y_i\}_{i=1}^n$. The third label set includes a label corresponding to each sample in the sample data of the target task.

Before feature screening, a probability model may be first constructed for the third feature set $\Phi = \{\varphi_i\}_{i=1}^n$. In construction of the probability model, a "0-1" indication variable z = $\{z_i\}_{i=1}^d$ may be introduced for each feature in the third feature set $\Phi = \{\varphi_i\}_{i=1}^n$, where d is a feature dimension, a probability that $z_i$ is 1 is denoted as $\pi_i$, $\pi = \{\pi_i\}_{i=1}^d$, and an initial value of $\pi_i$ may be preset, for example, 0.5.

When the value of the indication variable is 0, a prior distribution of a weight of a corresponding feature is a Spike prior distribution whose density is centralized at 0. When the value of the indication variable is 1, a prior distribution of a weight of the corresponding feature is a Slab prior distribution whose density is dispersed. Specifically, a linear classifier $y_i = w^T \varphi_i$ is considered, where a weight w of the linear classifier satisfies the following distribution:

$$p(w_i | z_i) = \begin{cases} N\left(0, \alpha_{i,1}^{-1}\right) & if \ z_i = 1 \\ N\left(0, \alpha_{i,2}^{-1}\right) & if \ z_i = 0 \end{cases}$$

A prior distribution of the weight w is processed according to Bayesian hierarchical processing, and it is assumed that $\alpha_{i,1}$ satisfies a gamma distribution $\Gamma(v_{i,1}, v_{i,2})$, and $\alpha_{i,2}$ satisfies a gamma distribution $\Gamma(v_{i,3} \ v_{i,4})$. When w and $\varphi_i$ are given, $y_i$ satisfies the Gaussian distribution $N(w^T \varphi_i, \beta^{-1})$, and $\beta$ satisfies a gamma distribution $\Gamma(v_{0,1}, v_{0,2})$. For ease of description, $v = \{v_{i,j}\}$ is used below to represent a parameter in the foregoing gamma distribution. Herein, $p(w_i | z_i)$ is the constructed probability model.

Then, a marginal likelihood of the third label set $Y = \{y_i\}_{i=1}^n$ that uses the third feature set $\Phi = \{\varphi_i\}_{i=1}^n$ as a condition may be calculated according to the Bayesian hierarchical modeling method. To be specific, when w is fixed, a conditional probability value $p(y_i | w, \varphi_i) = \frac{\sqrt{\beta}}{\sqrt{2\pi}} \exp\left(-\frac{\beta(y_i - w^T \varphi_i)^2}{2}\right)$ of each label in the third label set $Y = \{y_i\}_{i=1}^n$ and conditional probability values $p(Y | w, \Phi) = \prod_{i=1}^n p(y_i | w, \varphi_i)$ of all labels in the third label set $Y = \{y_i\}_{i=1}^n$ may be obtained through calculation.

A marginal probability value corresponding to the third label set $Y = \{y_i\}_{i=1}^n$ may be obtained through calculation based on each possible w. A marginal probability value $p(Y | \Phi; \pi, v) = \int p(w | \pi, v) \ p(Y | w, \Phi) dw$ of a marginal probability value of the third label set $Y = \{y_i\}_{i=1}^n$ may be finally obtained based on the marginal probability value that is obtained based on each possible w. A marginal likelihood function value $\log p(Y | \Phi; \pi, v)$ corresponding to the third label set may be obtained by inputting features included in the third feature set and labels included in the third label set into the finally obtained marginal probability value of the third label set.

After the marginal likelihood function value $\log p(Y | \Phi; \pi, v)$ corresponding to the third label set is obtained, $\pi$ and v in the marginal likelihood function value $\log p(Y | \Phi; \pi, v)$ may be optimized by using a variational inference-based expectation-maximization algorithm (Expectation-Maximization algorithm, EM), so that the marginal likelihood function value may be maximized, and corresponding $\hat{\pi}$ and $\hat{v}$ are obtained. Herein, $\hat{\pi}$ corresponding to each feature in the third feature set is a probability that the feature is equal to 1.

When a probability $\pi_i$ that an indication variable $z_i$ is equal to 1 is greater than a specific value, a feature corresponding to the indication variable is retained in the third feature set. Otherwise, the feature corresponding to the indication variable is discarded. Feature screening in the third feature set is completed in this way.

After feature screening is performed on a third feature set corresponding to each pre-trained model, features obtained through screening may be concatenated, and the to-be-trained network model is trained by using a feature obtained through concatenation, to obtain the first network model.

S406: Obtain a target model based on the K pre-trained models and the first network model, where the target model is used to process the target task.

In this embodiment, after the first network model is obtained, based on the K pre-trained models and the first network model, processing of the target task can be implemented. For example, the K pre-trained models and the first network model may be concatenated to obtain the target model. An output of the K pre-trained models may be used as an input of the first network model.

In addition, when feature screening is performed on each third feature set in S404, a feature screening module may be further disposed between the K pre-trained models and the first network model, so that a required feature is selected through screening by using the feature screening module. In this case, the target model is mainly formed by the K pre-trained models, the feature screening module, and a first network model. An output of the K pre-trained models may be used as an input of the feature screening module, and an output of the feature screening module may be used as an input of the first network model.

Therefore, after the target task is determined, the pre-trained model applicable to the target task can be quickly selected, through screening, from a model library formed by a large quantity of pre-trained models. The target model that is applied to process the target task and includes the pre-trained model selected through screening is obtained based on the pre-trained model selected through screening, so that the target task can be processed by using the target model. This effectively improves an out-of-distribution generalization capability of the pre-trained model.

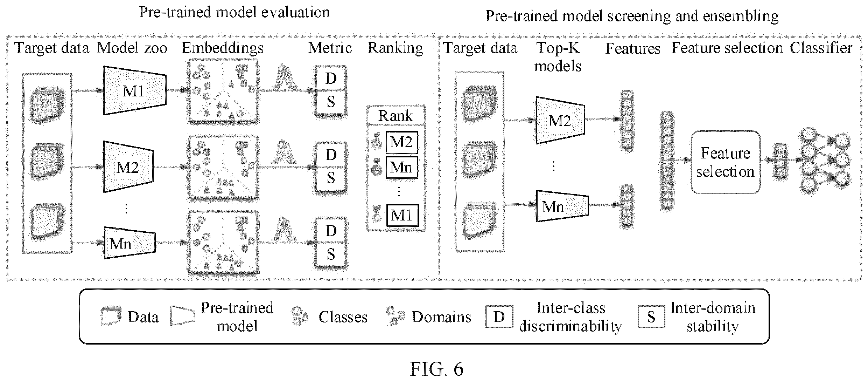

For ease of understanding, the following describes the foregoing solution with reference to FIG. 6.

For example, as shown in FIG. 6, FIG. 6 mainly includes a pre-trained model evaluation phase and a pre-trained model screening and ensembling phase.

In the pre-trained model evaluation phase, the sample data (that is, target date in FIG. 6) of the target task may be first obtained, and then the sample data is divided into the training data and the verification data. Then, feature extraction is separately performed on the training data and the verification data by using each pre-trained model in the model library (that is, a model zoo in FIG. 6). Finally, a stability value (that is, S in FIG. 6) and a validity value (that is, D in FIG. 6) of each pre-trained model are determined based on an extracted feature and a label corresponding to each feature. Finally, an evaluation value of each pre-trained model is determined based on the stability value and the validity value of each pre-trained model, so that a ranking (that is, a ranking in FIG. 6) of each pre-trained model can be obtained. After the evaluation value of each pre-trained model is obtained, the pre-trained model screening and ensembling phase may be entered.

In the pre-trained model screening and ensembling phase, the K pre-trained models (that is, top K Models in FIG. 6) may be selected through screening based on the evaluation value of each pre-trained model. Then, feature extraction may be performed on the sample data of the target task by using the K pre-trained models separately, to obtain K feature sets. Then screening is performed on features in the K feature sets (that is, Feature Selection in FIG. 6), and features selected through screening are concatenated. Finally, the to-be-trained network model (that is, a classifier in FIG. 6) may be trained by using a feature obtained through concatenation.

After the pre-trained model screening and ensembling phase, the K pre-trained models may be ensembled with a model obtained through training in the pre-trained model screening and ensembling phase, to obtain a model applicable to the target task. The target task may be processed by using the model.

Further, to prove validity of the model migration method provided in embodiments of this application, a model library formed by 35 pre-trained models and a picture classification task based on training of seven datasets are used as examples to compare the method with another solution. For ease of description, the model migration method in embodiments of this application is referred to as ZooD below.

Experiment data includes PACS, VLCS, OfficeHome, TerraIncognita, NICO-Animals, NICO-Vehicles, and DomainNet. A PACS dataset includes natural pictures of seven categories and four distributions and nearly 10,000 training set pictures. A VLCS dataset includes natural pictures of five categories and four distributions and more than 10,000 training set pictures. An OfficeHome dataset includes office scenario pictures of 65 categories and four distributions and 15,000 training set pictures. A TerraIncognita dataset includes wild animal pictures of 10 categories and four distributions and nearly 25,000 training set pictures. A NICO-Animals dataset includes animal pictures of 10 categories and four distributions and more than 10,000 training set pictures. A NICO-Vehicles dataset includes transportation pictures of nine categories and four distributions and more than 10,000 training set pictures. A DomainNet dataset includes natural pictures of 345 categories and six distributions and nearly 600,000 training set pictures.

An evaluation standard is as follows. The pre-trained model is evaluated by using a Kendall's coefficient. To be specific, correlation between a ZooD evaluation result and a result of fine-tuning performed for the target task by using each pre-trained model is compared. A higher result is better. In addition, for validity of feature screening, predicted classification accuracy obtained by retraining the classifier for the target task with a feature obtained through screening may be used. A higher result is better.

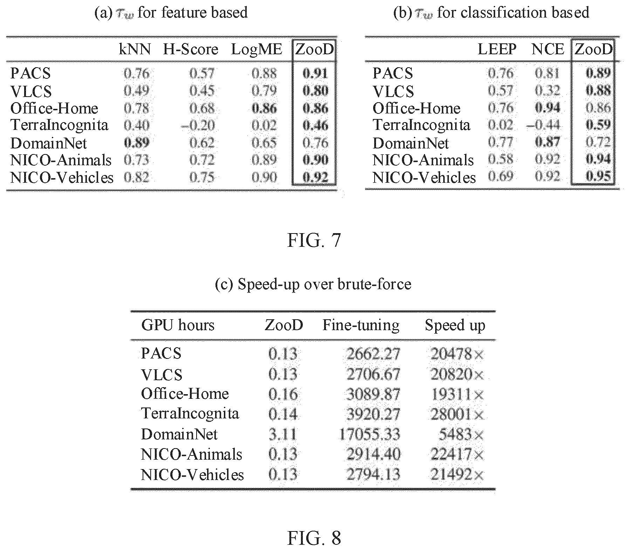

As shown in (a) in FIG. 7, the figure shows results obtained by comparing ZooD and a feature-based model evaluation method for seven data sets, and a model is evaluated in a fine-tuning manner. As shown in (b) in FIG. 7, the figure shows results obtained by comparing ZooD and a classifier-based model evaluation method for seven data sets, and a model is evaluated in a fine-tuning manner. It can be learned from FIG. 7 that ZooD is more accurate and stable than other methods. It can be learned from the results of the several datasets that the method in embodiments of this application achieves good effects for different types of training data. Validity and stability of feature extraction by the pre-trained model are evaluated for training data of a plurality of distributions. According to the method in embodiments of this application, an out-of-distribution generalization capability of the pre-trained model for a target downstream task can be more accurately evaluated, and the pre-trained model is more stable on datasets that are of different types and that have different distributions.

As shown in FIG. 8, the diagram is comparison between times for evaluating the 35 models by using ZooD and times for evaluating the 35 models in a fine-tuning manner. It can be learned from results shown in FIG. 8 that, compared with a time of the previous method of fine-tuning each pre-trained model for the target task, a time for evaluating the pre-trained model by using the method provided in this embodiment of this application is greatly shortened. In this way, a scale of the pre-trained model library can be further expanded, and an advantage of the model library can be fully utilized.

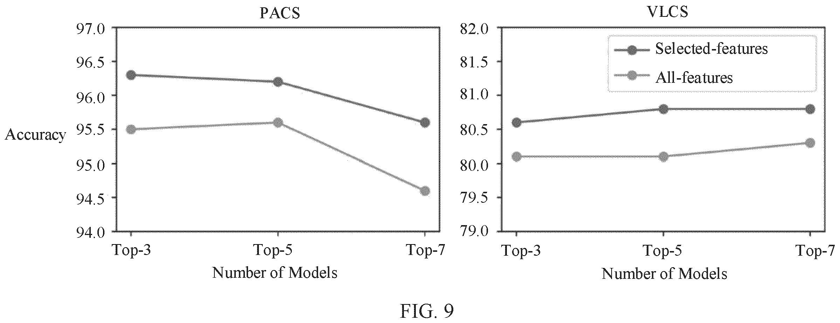

FIG. 9 shows comparison between classification accuracy of a model obtained by performing feature screening by using different quantities of pre-trained models and classification accuracy of a model obtained by performing no feature screening. It can be learned from the result shown in FIG. 9 that, feature screening is performed on a model selected by the pre-trained model evaluation module, and in a case that there are different quantities of pre-trained models, classification accuracy of a trained model obtained by performing feature screening is stably higher than classification accuracy of a trained model obtained by performing no feature screening. According to the solution in embodiments of this application, a feature with a largest information amount for a classification task can be effectively selected, and a feature affects the classification task are screened out. In this way, classification accuracy is improved.

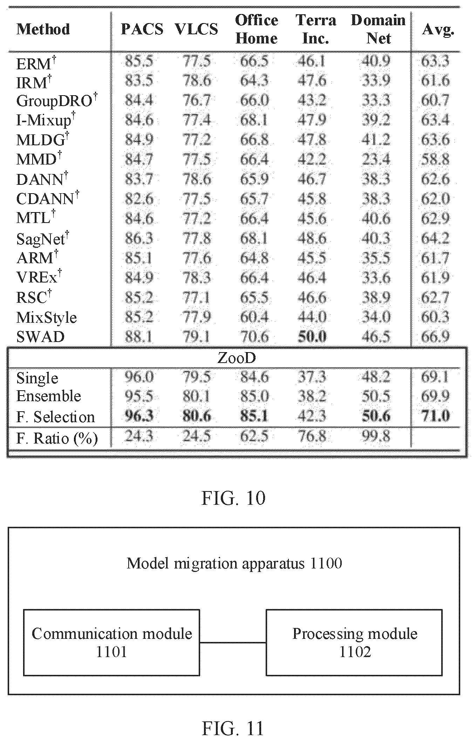

FIG. 10 shows comparison between a classification effect achieved by performing model selection, feature screening, and ensembling and a classification effect achieved by using another method of improving a model generalization effect according to an embodiment of this application. It can be learned from the result shown in FIG. 10 that, after model selection, feature screening, and ensembling are performed, classification accuracy of a model obtained by training based on training data of a target downstream task is significantly improved compared with classification accuracy of a single model obtained by training by using a previous special method. This indicates effectiveness of the solution in embodiments of this application when a model library is set. In FIG. 10, "single" refers to a single model; "ensemble" refers to a plurality of models; "F.Selection" refers to feature screening; and "F.Ratio" is a quantity of features selected through screening.

According to the method in the foregoing embodiments, an embodiment of this application provides a model migration apparatus. Refer to FIG. 11. FIG. 11 is a diagram of a structure of a model migration apparatus according to an embodiment of this application. As shown in the FIG. 11, the model migration apparatus 1100 includes: a communication module 1101 and a processing module 1102. The communication module 1101 is configured to obtain sample data of a target task, where the sample data includes a plurality of image samples. The processing module 1102 is configured to separately evaluate N pre-trained models based on the sample data, to obtain N evaluation values, where the evaluation value represents adaptation between the pre-trained model and the target task, one pre-trained model corresponds to one evaluation value, and $N \geq 2$. The processing module 1102 is further configured to determine K pre-trained models from the N pre-trained models based on the N evaluation values, where the K pre-trained models are models corresponding to first K evaluation values obtained by sorting the N evaluation values in descending order, and $1 \leq K \leq N$. The processing module 1102 is further configured to process the sample data based on the K pre-trained models to obtain a target model, where the target model includes the K pre-trained models, and the target model is used to process the target task. For example, the communication module 1101 may be but is not limited to the network interface 220 shown in FIG. 3, and the processing module 1102 may be but is not limited to the processor 210 shown in FIG. 3.

In some embodiments, to obtain the N evaluation values by separately evaluating the N pre-trained models based on the sample data of the target task, the processing module 1102 is specifically configured to: divide the sample data into M pieces of data, where $M \geq 2$; select one piece of data from the M pieces of data as verification data, and use remaining data in the M pieces of data as training data; determine a first validity value of each pre-trained model a first stability value of each pre-trained model based on the training data and the verification data, where the first validity value represents accuracy of predicting a label of the verification data based on a feature extracted from the training data by using the pre-trained model, and the first stability value represents similarity between a feature of the training data and a feature of the verification data that are extracted by using the pre-trained model; and determine the N evaluation values based on the first validity value and the first stability value of each pre-trained model.

In some embodiments, when determining the first validity value of each pre-trained model based on the training data and the verification data, the processing module 1102 is specifically configured to: for any first pre-trained model in the N pre-trained models, perform feature extraction on the training data by using the first pre-trained model, to obtain a first feature set, where the first feature set includes a feature corresponding to each sample in the training data; and determine a first validity value of the first pre-trained model based on the first feature set, a first label set associated with the first feature set, a second feature set, and a second label set associated with the second feature set, where the first label set includes a label corresponding to each sample in the training data, the second feature set includes a feature that corresponds to each sample in the verification data and that is extracted by using the first pre-trained model, and the second label set includes a label corresponding to each sample in the verification data.

In some embodiments, when determining the first validity value of the first pre-trained model based on the first feature set, the first label set associated with the first feature set, the second feature set, and the second label set associated with the second feature set, the processing module 1102 is specifically configured to: construct a first prediction model based on the first feature set, the first label set, and a preset classifier; and process, based on the first prediction model, at least the second feature set and the second label set to obtain the first validity value of the first pre-trained model.

In some embodiments, when determining the first stability value of each pre-trained model based on the training data and the verification data, the processing module 1102 is specifically configured to: for any first pre-trained model in the N pre-trained models, perform feature extraction on the training data by using the first pre-trained model, to obtain a first feature set, where the first feature set includes a feature corresponding to each sample in the training data; and determine a first stability value of the first pre-trained model based on the first feature set and a second feature set, where the second feature set includes a feature that corresponds to each sample in the verification data and that is extracted by using the first pre-trained model.

In some embodiments, when determining the first stability value of the first pre-trained model based on the first feature set and the second feature set, the processing module 1102 is specifically configured to: construct a target distribution based on the first feature set, where the target distribution includes one or more of a Gaussian distribution, a Bernoulli distribution, a Poisson distribution, a geometric distribution, or a beta distribution; determine, based on the target distribution, a likelihood function value corresponding to the second feature set; and use the likelihood function value corresponding to the second feature set as the first stability value of the first pre-trained model.

In some embodiments, the processing module 1102 is further configured to: use each of the M pieces of data as verification data once, and determine a first validity value of each pre-trained model once and a first stability value of each pre-trained model once based on verification data selected each time, where each pre-trained model corresponds to M first validity values and M first stability values.

When determining the N evaluation values based on the first validity value and the first stability value of each pre-trained model, the processing module 1102 is further configured to: determine a second validity value of each pre-trained model and a second stability value of each pre-trained model based on the M first validity values and the M first stability values that correspond to each pre-trained model; and determine the N evaluation values based on the second validity value and the second stability value of each pre-trained model.

In some embodiments, a target validity value is the first validity value, and a target stability value is the first stability value; or a target validity value is the second validity value, and a target stability value is the second stability value.

When determining the N evaluation values based on the target validity value and the target stability value of each pre-trained model, the processing module 1102 is specifically configured to: determine a weight value of a target value based on N target validity values and N target stability values, where the target value is the target validity value or the target stability value; and separately process, based on the weight value of the target value, the target validity value and the target stability value that correspond to each pre-trained model, to obtain an evaluation value of each pre-trained model.

In some embodiments, when processing the sample data based on the K pre-trained models to obtain the target model, the processing module 1102 is specifically configured to: separately perform feature extraction on the sample data by using the K pre-trained models, to obtain K third feature sets, where one third feature set is a set of features extracted by using one of the K pre-trained models; train a to-be-trained network model by using the K third feature sets, to obtain a first network model; and obtain the target model based on the K pre-trained models and the first network model.

In some embodiments, when training the to-be-trained network model by using the K third feature sets, the processing module 1102 is specifically configured to: perform feature screening on each of the K third feature sets, to obtain K fourth feature sets, where each fourth feature set corresponds to one third feature set; and train the to-be-trained network model by using the K fourth feature sets.

In some embodiments, when performing feature screening on each of the K third feature sets, the processing module 1102 is specifically configured to: construct, for any feature set in the K third feature sets, a probability model of the any feature set based on a spike-and-slab prior; determine, based on the probability model and according to a Bayesian hierarchical modeling method, a marginal probability value of a target label set corresponding to the any feature set; determine a second marginal likelihood function value of the target label set based on the marginal probability value of the target label set; determine, by using a variational inference-based expectation-maximization algorithm to maximize the second marginal likelihood function value, a probability that an indication variable corresponding to each feature in the any feature set is equal to 1; and when a probability that an indication variable corresponding to a target feature in the any feature set is equal to 1 is greater than or equal to a preset probability value, retain the target feature; or when a probability that an indication variable corresponding to a target feature is equal to 1 is less than a preset probability value, remove the target feature.

It should be understood that the foregoing apparatus is configured to perform the method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

According to the method in the foregoing embodiments, an embodiment of this application provides an electronic device. This electronic device may include: at least one memory, configured to store a program; and at least one processor, configured to execute the program stored in the memory. When the program stored in the memory is executed, the processor is configured to perform the method in the foregoing embodiments. For example, the electronic device may be but is not limited to the server 200 shown in FIG. 3.

Based on the method in the foregoing embodiments, an embodiment of this application provides a computer-readable storage medium. The computer-readable storage medium stores a computer program. When the computer program is run on a processor, the processor is enabled to perform method in the foregoing embodiments.

Based on the method in the foregoing embodiments, an embodiment of this application provides a computer program product. When the computer program product is run on a processor, the processor is enabled to perform the method in the foregoing embodiments.

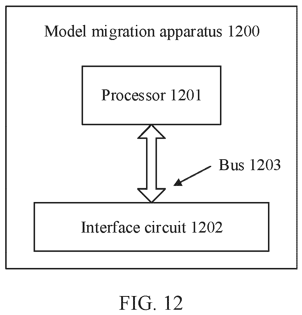

According to the method in the foregoing embodiments, an embodiment of this application further provides a model migration apparatus. Refer to FIG. 12. FIG. 12 is a diagram of a structure of a model migration apparatus according to an embodiment of this application. As shown in FIG. 12, a model migration apparatus 1200 includes one or more processors 1201 and an interface circuit 1202. Optionally, the model migration apparatus 1200 may further include a bus 1203.

The processor 1201 may be an integrated circuit chip, and has a signal processing capability. In an implementation process, the steps in the foregoing method can be performed by using an integrated logic circuit of hardware in the processor 1201, or by using instructions in a form of software. The processor 1201 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1201 may implement or perform the methods and steps that are disclosed in embodiments of this application. The general-purpose processor may be a microprocessor, or the processor may be any conventional processor or the like.

The interface circuit 1202 may be configured to send or receive data, instructions, or information. The processor 1201 may process data, instructions, or other information received through the interface circuit 1202, and send, through the interface circuit 1202, information obtained through processing.

Optionally, the model migration apparatus 1200 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the interface circuit 1202 may be configured to output an execution result of the processor 1201.

It should be noted that functions corresponding to the processor 1201 and the interface circuit 1202 may be implemented through hardware design, software design, or a combination of software and hardware. This is not limited herein.

It should be understood that steps in the foregoing method embodiments may be implemented by using a logic circuit in a form of hardware or instructions in a form of software in the processor.

It may be understood that sequence numbers of the steps do not mean execution sequences in the foregoing embodiments. The execution sequences of the processes should be determined according to functions and internal logic of the processes, and should not be construed as any limitation on the implementation processes of embodiments of this application. In addition, in some possible implementations, the steps in the foregoing embodiments may be selectively performed, or may be partially performed, or may be completely performed according to an actual situation. This is not limited herein.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not intended to limit the scope of embodiments of this application.

**Claims**

1. A model migration method, wherein the method comprises:

   obtaining sample data of a target task, wherein the sample data comprises a plurality of image samples;
   separately evaluating N pre-trained models based on the sample data, to obtain N evaluation values, wherein the evaluation value represents adaptation between the pre-trained model and the target task, one pre-trained model corresponds to one evaluation value, and $N \geq 2$;
   determining K pre-trained models from the N pre-trained models based on the N evaluation values, wherein the K pre-trained models are models corresponding to first K evaluation values obtained by sorting the N evaluation values in descending order, and $1 \leq K \leq N$; and
   processing the sample data based on the K pre-trained models to obtain a target model, wherein the target model comprises the K pre-trained models, and the target model is used to process the target task.

2. The method according to claim 1, wherein the separately evaluating N pre-trained models based on the sample data, to obtain N evaluation values specifically comprises:

   dividing the sample data into M pieces of data, wherein $M \geq 2$;
   selecting one piece of data from the M pieces of data as verification data, and using remaining data in the M pieces of data as training data;
   determining a first validity value of each pre-trained model and a first stability value of each pre-trained model based on the training data and the verification data, wherein the first validity value represents accuracy of predicting a label of the verification data based on a feature extracted from the training data by using the pre-trained model, and the first stability value represents similarity between a feature of the training data and a feature of the verification data that are extracted by using the pre-trained model; and
   determining the N evaluation values based on the first validity value and the first stability value of each pre-trained model.

3. The method according to claim 2, wherein the determining a first validity value of each pre-trained model based on the training data and the verification data specifically comprises:

   for any first pre-trained model in the N pre-trained models, performing feature extraction on the training data by using the first pre-trained model, to obtain a first feature set, wherein the first feature set comprises a feature corresponding to each sample in the training data; and
   determining a first validity value of the first pre-trained model based on the first feature set, a first label set associated with the first feature set, a second feature set, and a second label set associated with the second feature set, wherein the first label set comprises a label corresponding to each sample in the training data, the second feature set comprises a feature that corresponds to each sample in the verification data and that is extracted by using the first pre-trained model, and the second label set comprises a label corresponding to each sample in the verification data.

4. The method according to claim 3, wherein the determining a first validity value of the first pre-trained model based on the first feature set, a first label set associated with the first feature set, a second feature set, and a second label set associated with the second feature set specifically comprises:

   constructing a first prediction model based on the first feature set, the first label set, and a preset classifier; and
   processing, based on the first prediction model, at least the second feature set and the second label set to obtain the first validity value of the first pre-trained model.

5. The method according to any one of claims 2 to 4, wherein the determining a first stability value of each pre-trained model based on the training data and the verification data specifically comprises:

for any first pre-trained model in the N pre-trained models, performing feature extraction on the training data by using the first pre-trained model, to obtain a first feature set, wherein the first feature set comprises a feature corresponding to each sample in the training data; and

determining a first stability value of the first pre-trained model based on the first feature set and a second feature set, wherein the second feature set comprises a feature that corresponds to each sample in the verification data and that is extracted by using the first pre-trained model.

6. The method according to claim 5, wherein the determining a first stability value of the first pre-trained model based on the first feature set and a second feature set specifically comprises:

constructing a target distribution based on the first feature set, wherein the target distribution comprises one or more of a Gaussian distribution, a Bernoulli distribution, a Poisson distribution, a geometric distribution, or a beta distribution;

determining, based on the target distribution, a likelihood function value corresponding to the second feature set; and

using the likelihood function value corresponding to the second feature set as the first stability value of the first pre-trained model.

7. The method according to any one of claims 2 to 6, wherein the method further comprises:

using each of the M pieces of data as verification data once, and determining a first validity value of each pre-trained model once and a first stability value of each pre-trained model once based on verification data selected each time, wherein each pre-trained model corresponds to M first validity values and M first stability values; and the determining the N evaluation values based on the first validity value and the first stability value of each pre-trained model further comprises:

determining a second validity value of each pre-trained model and a second stability value of each pre-trained model based on the M first validity values and the M first stability values that correspond to each pre-trained model; and

determining the N evaluation values based on the second validity value and the second stability value of each pre-trained model.

8. The method according to any one of claims 2 to 7, wherein a target validity value is the first validity value, and a target stability value is the first stability value; or a target validity value is the second validity value, and a target stability value is the second stability value; and

determining the N evaluation values based on the target validity value and the target stability value of each pre-trained model specifically comprises:

determining a weight value of a target value based on N target validity values and N target stability values, wherein the target value is the target validity value or the target stability value; and

separately processing, based on the weight value of the target value, the target validity value and the target stability value that correspond to each pre-trained model, to obtain an evaluation value of each pre-trained model.

9. The method according to any one of claims 1 to 8, wherein the processing the sample data based on the K pre-trained models to obtain a target model specifically comprises:

separately performing feature extraction on the sample data by using the K pre-trained models, to obtain K third feature sets, wherein one third feature set is a set of features extracted by using one of the K pre-trained models;

training a to-be-trained network model by using the K third feature sets, to obtain a first network model; and obtaining the target model based on the K pre-trained models and the first network model.

10. The method according to claim 9, wherein the training a to-be-trained network model by using the K third feature sets specifically comprises:

performing feature screening on each of the K third feature sets, to obtain K fourth feature sets, wherein each fourth feature set corresponds to one third feature set; and

training the to-be-trained network model by using the K fourth feature sets.

11. The method according to claim 10, wherein the performing feature screening on each of the K third feature sets specifically comprises:

constructing, for any feature set in the K third feature sets, a probability model of the any feature set based on a spike-and-slab prior;

determining, based on the probability model and according to a Bayesian hierarchical modeling method, a marginal probability value of a target label set corresponding to the any feature set;

determining a second marginal likelihood function value of the target label set based on the marginal probability value of the target label set;

determining, by using a variational inference-based expectation-maximization algorithm to maximize the second marginal likelihood function value, a probability that an indication variable corresponding to each feature in the any feature set is equal to 1; and

when a probability that an indication variable corresponding to a target feature in the any feature set is equal to 1 is greater than or equal to a preset probability value, retaining the target feature; or

when a probability that an indication variable corresponding to a target feature is equal to 1 is less than a preset probability value, removing the target feature.

12. A model migration apparatus, comprising:

a communication module, configured to obtain sample data of a target task, wherein the sample data comprises a plurality of image samples; and

a processing module, configured to separately evaluate N pre-trained models based on the sample data, to obtain N evaluation values, wherein the evaluation value represents adaptation between the pre-trained model and the target task, one pre-trained model corresponds to one evaluation value, and $N \geq 2$, wherein

the processing module is further configured to determine K pre-trained models from the N pre-trained models based on the N evaluation values, wherein the K pre-trained models are models corresponding to first K evaluation values obtained by sorting the N evaluation values in descending order, and $1 \leq K \leq N$; and

the processing module is further configured to process the sample data based on the K pre-trained models to obtain a target model, wherein the target model comprises the K pre-trained models, and the target model is used to process the target task.

13. The apparatus according to claim 12, wherein when separately evaluating the N pre-trained models based on the sample data of the target task, to obtain the N evaluation values, the processing module is specifically configured to:

divide the sample data into M pieces of data, wherein $M \geq 2$;

select one piece of data from the M pieces of data as verification data, and use remaining data in the M pieces of data as training data;

determine a first validity value of each pre-trained model and a first stability value of each pre-trained model based on the training data and the verification data, wherein the first validity value represents accuracy of predicting a label of the verification data based on a feature extracted from the training data by using the pre-trained model, and the first stability value represents similarity between a feature of the training data and a feature of the verification data that are extracted by using the pre-trained model; and

determine the N evaluation values based on the first validity value and the first stability value of each pre-trained model.

14. The apparatus according to claim 13, wherein when determining the first validity value of each pre-trained model based on the training data and the verification data, the processing module is specifically configured to:

for any first pre-trained model in the N pre-trained models, perform feature extraction on the training data by using the first pre-trained model, to obtain a first feature set, wherein the first feature set comprises a feature corresponding to each sample in the training data; and

determine a first validity value of the first pre-trained model based on the first feature set, a first label set associated with the first feature set, a second feature set, and a second label set associated with the second feature set, wherein the first label set comprises a label corresponding to each sample in the training data, the second feature set comprises a feature that corresponds to each sample in the verification data and that is extracted by using the first pre-trained model, and the second label set comprises a label corresponding to each sample in the verification data.

15. The apparatus according to claim 14, wherein when determining the first validity value of the first pre-trained model based on the first feature set, the first label set associated with the first feature set, the second feature set, and the second label set associated with the second feature set, the processing module is specifically configured to:

construct a first prediction model based on the first feature set, the first label set, and a preset classifier; and process, based on the first prediction model, at least the second feature set and the second label set to obtain the first validity value of the first pre-trained model.

16. The apparatus according to any one of claims 13 to 15, wherein when determining the first stability value of each pre-trained model based on the training data and the verification data, the processing module is specifically configured to:

for any first pre-trained model in the N pre-trained models, perform feature extraction on the training data by using the first pre-trained model, to obtain a first feature set, wherein the first feature set comprises a feature corresponding to each sample in the training data; and determine a first stability value of the first pre-trained model based on the first feature set and a second feature set, wherein the second feature set comprises a feature that corresponds to each sample in the verification data and that is extracted by using the first pre-trained model.

17. The apparatus according to claim 16, wherein when determining the first stability value of the first pre-trained model based on the first feature set and the second feature set, the processing module is specifically configured to:

construct a target distribution based on the first feature set, wherein the target distribution comprises one or more of a Gaussian distribution, a Bernoulli distribution, a Poisson distribution, a geometric distribution, or a beta distribution; determine, based on the target distribution, a likelihood function value corresponding to the second feature set; and use the likelihood function value corresponding to the second feature set as the first stability value of the first pre-trained model.

18. The apparatus according to any one of claims 13 to 17, wherein the processing module is further configured to:

use each of the M pieces of data as verification data once, and determine a first validity value of each pre-trained model once and a first stability value of each pre-trained model once based on verification data selected each time, wherein each pre-trained model corresponds to M first validity values and M first stability values; and when determining the N evaluation values based on the first validity value and the first stability value of each pre-trained model, the processing module is further configured to:

determine a second validity value of each pre-trained model and a second stability value of each pre-trained model based on the M first validity values and the M first stability values that correspond to each pre-trained model; and determine the N evaluation values based on the second validity value and the second stability value of each pre-trained model.

19. The apparatus according to any one of claims 13 to 18, wherein a target validity value is the first validity value, and a target stability value is the first stability value; or a target validity value is the second validity value, and a target stability value is the second stability value; and when determining the N evaluation values based on the target validity value and the target stability value of each pre-trained model, the processing module is specifically configured to:

determine a weight value of a target value based on N target validity values and N target stability values, wherein the target value is the target validity value or the target stability value; and separately process, based on the weight value of the target value, the target validity value and the target stability value that correspond to each pre-trained model, to obtain an evaluation value of each pre-trained model.

20. The apparatus according to any one of claims 12 to 19, wherein when processing the sample data based on the K pre-trained models to obtain the target model, the processing module is specifically configured to:

separately perform feature extraction on the sample data by using the K pre-trained models, to obtain K third feature sets, wherein one third feature set is a set of features extracted by using one of the K pre-trained models; train a to-be-trained network model by using the K third feature sets, to obtain a first network model; and obtain the target model based on the K pre-trained models and the first network model.

21. The apparatus according to claim 20, wherein when training the to-be-trained network model by using the K third feature sets, the processing module is specifically configured to:

perform feature screening on each of the K third feature sets, to obtain K fourth feature sets, wherein each fourth feature set corresponds to one third feature set; and train the to-be-trained network model by using the K fourth feature sets.

22. The apparatus according to claim 21, wherein when performing feature screening on each of the K third feature sets, the processing module is specifically configured to:

construct, for any feature set in the K third feature sets, a probability model of the any feature set based on a spike-and-slab prior; determine, based on the probability model and according to a Bayesian hierarchical modeling method, a marginal probability value of a target label set corresponding to the any feature set; determine a second marginal likelihood function value of the target label set based on the marginal probability value of the target label set; determine, by using a variational inference-based expectation-maximization algorithm to maximize the second marginal likelihood function value, a probability that an indication variable corresponding to each feature in the any feature set is equal to 1; and when a probability that an indication variable corresponding to a target feature in the any feature set is equal to 1 is greater than or equal to a preset probability value, retain the target feature; or when a probability that an indication variable corresponding to a target feature is equal to 1 is less than a preset probability value, remove the target feature.

23. A model migration apparatus, comprising at least one processor and an interface, wherein

the at least one processor obtains program instructions or data through the interface; and the at least one processor is configured to execute the program line instructions, to implement the method according to any one of claims 1 to 11.

24. An electronic device, comprising:

at least one memory, configured to store a program; and at least one processor, configured to execute the program stored in the memory, wherein when the program stored in the memory is executed, the processor is configured to perform the method according to any one of claims 1 to 11.

25. A computer-readable storage medium, wherein the computer-readable storage medium stores a computer program, and when the computer program is run on a processor, the processor is enabled to perform the method according to any one of claims 1 to 11.

26. A computer program product, wherein when the computer program product runs on a processor, the processor is enabled to perform the method according to any one of claims 1 to 11.

FIG. 1

FIG. 2

FIG. 3

```
                                                              S401
┌─────────────────────────────────────────────────────┐
│          Obtain sample data of a target task          │
└─────────────────────────────────────────────────────┘
                            │
                            ▼                            S402
┌─────────────────────────────────────────────────────┐
│ Separately evaluate N pre-trained models based on the │
│ sample data of the target task, to obtain N           │
│ evaluation values, where one pre-trained model        │
│ corresponds to one evaluation value, and N≥2          │
└─────────────────────────────────────────────────────┘
                            │
                            ▼                            S403
┌─────────────────────────────────────────────────────┐
│ Determine K pre-trained models from the N pre-trained │
│ models based on the N evaluation values, where the K  │
│ pre-trained models are models corresponding to first  │
│ K evaluation values obtained by sorting the N         │
│ evaluation values in descending order, and 1≤K≤N      │
└─────────────────────────────────────────────────────┘
                            │
                            ▼                            S404
┌─────────────────────────────────────────────────────┐
│ Separately perform feature extraction on the sample   │
│ data of the target task by using the K pre-trained    │
│ models, to obtain K third feature sets, where one     │
│ third feature set is a set of features extracted by   │
│ using one of the K pre-trained models                 │
└─────────────────────────────────────────────────────┘
                            │
                            ▼                            S405
┌─────────────────────────────────────────────────────┐
│ Train a to-be-trained network model by using the K    │
│ third feature sets, to obtain a first network model   │
└─────────────────────────────────────────────────────┘
                            │
                            ▼                            S406
┌─────────────────────────────────────────────────────┐
│ Obtain a target model based on the K pre-trained      │
│ models and the first network model, where the target  │
│ model is used to process the target task              │
└─────────────────────────────────────────────────────┘
```

FIG. 4

Determine training data and verification data based on sample data — S501

Perform feature extraction on samples in the training data by using a pre-trained model to obtain a first feature set, where the first feature set includes a feature corresponding to each sample in sample data of the training data — S502

Determine a validity value of the pre-trained model based on the first feature set, a first label set associated with the first feature set, a second feature set, and a second label set associated with the second feature set, where the first label set includes a label corresponding to each sample in the training data, the second feature set includes a feature corresponding to each sample in sample data of the verification data, and the second label set includes a label corresponding to each sample in the verification data — S503

FIG. 5

Pre-trained model evaluation

Pre-trained model screening and ensembling

Target data  Model zoo  Embeddings  Metric  Ranking  Target data  Top-K models  Features  Feature selection  Classifier

Rank

M2
Mn
M1

Data    Pre-trained model    Classes    Domains    D Inter-class discriminability    S Inter-domain stability

FIG. 6

EP 4 528 671 A1

(a) $\tau_w$ for feature based

|  | kNN | H-Score | LogME | ZooD |
|---|---|---|---|---|
| PACS | 0.76 | 0.57 | 0.88 | **0.91** |
| VLCS | 0.49 | 0.45 | 0.79 | **0.80** |
| Office-Home | 0.78 | 0.68 | **0.86** | **0.86** |
| TerraIncognita | 0.40 | −0.20 | 0.02 | **0.46** |
| DomainNet | **0.89** | 0.62 | 0.65 | 0.76 |
| NICO-Animals | 0.73 | 0.72 | 0.89 | **0.90** |
| NICO-Vehicles | 0.82 | 0.75 | 0.90 | **0.92** |

(b) $\tau_w$ for classification based

|  | LEEP | NCE | ZooD |
|---|---|---|---|
| PACS | 0.76 | 0.81 | **0.89** |
| VLCS | 0.57 | 0.32 | **0.88** |
| Office-Home | 0.76 | **0.94** | 0.86 |
| TerraIncognita | 0.02 | −0.44 | **0.59** |
| DomainNet | 0.77 | **0.87** | 0.72 |
| NICO-Animals | 0.58 | 0.92 | **0.94** |
| NICO-Vehicles | 0.69 | 0.92 | **0.95** |

FIG. 7

(c) Speed-up over brute-force

| GPU hours | ZooD | Fine-tuning | Speed up |
|---|---|---|---|
| PACS | 0.13 | 2662.27 | 20478× |
| VLCS | 0.13 | 2706.67 | 20820× |
| Office-Home | 0.16 | 3089.87 | 19311× |
| TerraIncognita | 0.14 | 3920.27 | 28001× |
| DomainNet | 3.11 | 17055.33 | 5483× |
| NICO-Animals | 0.13 | 2914.40 | 22417× |
| NICO-Vehicles | 0.13 | 2794.13 | 21492× |

FIG. 8

FIG. 9

| Method | PACS | VLCS | Office Home | Terra Inc. | Domain Net | Avg. |
|--------|------|------|-------------|------------|------------|------|
| ERM[†] | 85.5 | 77.5 | 66.5 | 46.1 | 40.9 | 63.3 |
| IRM[†] | 83.5 | 78.6 | 64.3 | 47.6 | 33.9 | 61.6 |
| GroupDRO[†] | 84.4 | 76.7 | 66.0 | 43.2 | 33.3 | 60.7 |
| I-Mixup[†] | 84.6 | 77.4 | 68.1 | 47.9 | 39.2 | 63.4 |
| MLDG[†] | 84.9 | 77.2 | 66.8 | 47.8 | 41.2 | 63.6 |
| MMD[†] | 84.7 | 77.5 | 66.4 | 42.2 | 23.4 | 58.8 |
| DANN[†] | 83.7 | 78.6 | 65.9 | 46.7 | 38.3 | 62.6 |
| CDANN[†] | 82.6 | 77.5 | 65.7 | 45.8 | 38.3 | 62.0 |
| MTL[†] | 84.6 | 77.2 | 66.4 | 45.6 | 40.6 | 62.9 |
| SagNet[†] | 86.3 | 77.8 | 68.1 | 48.6 | 40.3 | 64.2 |
| ARM[†] | 85.1 | 77.6 | 64.8 | 45.5 | 35.5 | 61.7 |
| VREx[†] | 84.9 | 78.3 | 66.4 | 46.4 | 33.6 | 61.9 |
| RSC[†] | 85.2 | 77.1 | 65.5 | 46.6 | 38.9 | 62.7 |
| MixStyle | 85.2 | 77.9 | 60.4 | 44.0 | 34.0 | 60.3 |
| SWAD | 88.1 | 79.1 | 70.6 | **50.0** | 46.5 | 66.9 |
| ZooD | | | | | | |
| Single | 96.0 | 79.5 | 84.6 | 37.3 | 48.2 | 69.1 |
| Ensemble | 95.5 | 80.1 | 85.0 | 38.2 | 50.5 | 69.9 |
| F. Selection | **96.3** | **80.6** | **85.1** | 42.3 | **50.6** | **71.0** |
| F. Ratio (%) | 24.3 | 24.5 | 62.5 | 76.8 | 99.8 | |

FIG. 10

Model migration apparatus 1100

Communication module
1101

Processing module
1102

FIG. 11

FIG. 12

## INTERNATIONAL SEARCH REPORT

| International application No. |
| --- |
| **PCT/CN2023/098117** |

**A. CLASSIFICATION OF SUBJECT MATTER**

G06V10/776(2022.01)i

According to International Patent Classification (IPC) or to both national classification and IPC

**B. FIELDS SEARCHED**

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNTXT, DWPI, ENTXTC, CJFD: 模型, 目标, 排序, 评估, 评估值, 迁移, 稳定性, 有效性, 预训练, model, object, sort, evaluate, migrate, stability, availability, pre, train.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115131633 A (HUAWEI TECHNOLOGIES CO., LTD.) 30 September 2022 (2022-09-30) claims 1-26 | 1-26 |
| X | CN 112434462 A (HUAWEI TECHNOLOGIES CO., LTD.) 02 March 2021 (2021-03-02) description, paragraphs 0005-0039 | 1-26 |
| A | CN 113705769 A (HUAWEI TECHNOLOGIES CO., LTD.) 26 November 2021 (2021-11-26) entire document | 1-26 |
| A | US 2021065913 A1 (UNIVERSITY OF CENTRAL FLORIDA RESEARCH FOUNDATION, INC.) 04 March 2021 (2021-03-04) entire document | 1-26 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 August 2023** | **27 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| | International application No. |
|---|---|
| | **PCT/CN2023/098117** |

| Patent document cited in search report | | | Publication date (day/month/year) | Patent family member(s) | | | Publication date (day/month/year) |
|---|---|---|---|---|---|---|---|
| CN | 115131633 | A | 30 September 2022 | None | | | |
| CN | 112434462 | A | 02 March 2021 | WO | 2022083624 | A1 | 28 April 2022 |
| CN | 113705769 | A | 26 November 2021 | None | | | |
| US | 2021065913 | A1 | 04 March 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210665169